# EUROPÄISCHE PATENTSCHRIFT

(11) **EP 1 013 111 B1**
(45) Veröffentlichungstag und Bekanntmachung des Hinweises auf die Patenterteilung: **07.04.2004**
(21) Anmeldenummer: 98948808.5
(22) Anmeldetag: 18.08.1998
(51) Int. Cl.: H04Q 7/20, H04Q 7/38

(54) **VERFAHREN ZUM BENUTZERGESTEUERTEN ABBAUEN VON DRAHTLOSEN TELEKOMMUNIKATIONSVERBINDUNGEN IN DRAHTLOSEN TELEKOMMUNIKATIONSSYSTEMEN, INSBESONDERE DECT-SYSTEMEN**
METHOD FOR THE USER-CONTROLLED RELEASE OF WIRELESS TELECOMMUNICATIONS CONNECTIONS IN WIRELESS TELECOMMUNICATIONS SYSTEMS, ESPECIALLY DECT SYSTEMS
PROCEDE DE LIBERATION DE CONNEXIONS DE TELECOMMUNICATIONS SANS FIL DANS DES SYSTEMES DE TELECOMMUNICATIONS SANS FIL, NOTAMMENT DES SYSTEMES DECT

(30) Priorität: 02.09.1997 DE 19738339
(43) Veröffentlichungstag der Anmeldung: 28.06.2000
(73) Patentinhaber: SIEMENS AKTIENGESELLSCHAFT, 80333 München (DE)
(72) Erfinder: KAMPERSCHROER, Erich, D-46499 Hamminkeln (DE); SLONINA, Bernhard, D-44359 Dortmund (DE); BECKERS, Michael, D-46395 Bochholt (DE)
(86) Internationale Anmeldenummer: PCT/DE1998/002404
(87) Internationale Veröffentlichungsnummer: WO 1999/012361

(56) Entgegenhaltungen:
- EP-A- 0 627 864
- US-A- 5 535 429

## Beschreibung

In Nachrichtensystemen mit einer Nachrichtenübertragungsstrecke zwischen einer Nachrichtenquelle und einer Nachrichtensenke werden zur Nachrichtenverarbeitung und -übertragung. Sende- und Empfangsgeräte verwendet, bei denen
1) die Nachrichtenverarbeitung und Nachrichtenübertragung in einer bevorzugten Übertragungsrichtung (Simplex-Betrieb) .oder in beiden Übertragungsrichtungen (Duplex-Betrieb) erfolgen kann,
2) die Nachrichtenverarbeitung analog oder digital ist,
3) die Nachrichtenübertragung über die Fernübertragungsstrekke drahtlos auf der Basis von diversen Nachrichtenübertragungsverfahren FDMA (**F**requency **D**ivision **M**ultiple **A**ccess), TDMA (**T**ime **D**ivision **M**ultiple **A**ccess) und/oder CDMA (**C**ode **D**ivision **M**ultiple **A**ccess) - z.B. nach Funkstandards wie DECT, GSM, WACS oder PACS, IS-54, IS-95, PHS, PDC etc. [vgl. IEEE Cominunications Magazine, January 1995, Seiten 50 bis 57; D.D. Falconer et al:"Time Division Multiple Access Methods for Wireless Personal Communications"] und/oder drahtgebunden erfolgt.

"Nachricht" ist ein übergeordneter Begriff, der sowohl für den Sinngehalt (Information).als auch für die physikalische Repräsentation (Signal) steht. Trotz des gleichen Sinngehaltes einer Nachricht - also gleicher Information - können unterschiedliche Signalformen auftreten. So kann z.B. eine einen Gegenstand betreffende Nachricht
(1) in Form eines Bildes,
(2) als gesprochenes Wort,
(3) als geschriebenes Wort,
(4) als verschlüsseltes Wort oder Bild übertragen werden.

Die Übertragungsart gemäß (1) ... (3) ist dabei normalerweise durch kontinuierliche (analoge) Signale charakterisiert, während bei der Übertragungsart gemäß (4) gewöhnlich diskontinuierliche Signale (z.B. Impulse, digitale Signale) entstehen.

Ausgehend von dieser allgemeinen Definition eines Nachrichtensystems bezieht sich die Erfindung auf ein Verfahren zum benutzergesteuerten Abbauen von drahtlosen Telekommunikationsverbindungen in drahtlosen Telekommunikationssystemen, insbesondere DECT-Systemen

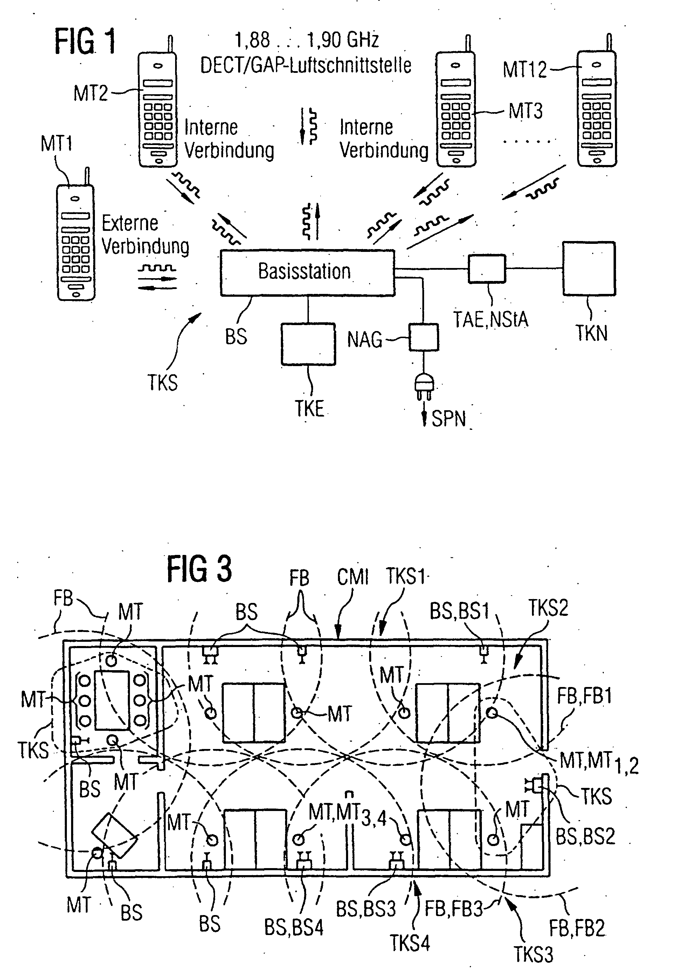

Telekommunikationssysteme der vorstehend definierten Art sind beispielsweise DECT-Systeme [Digital Enhanced (früher: European) Cordless Telecommunication; *vgl. (1): Nachrichtentechnik Elektronik 42 (1992) Jan.*/*Feb. Nr. 1, Berlin, DE; U. Pil*ger *"Struktur des DECT-Standards", Seiten 23 bis 29* ***in Verbindung mit*** *der ETSI-Publikation ETS 300175-1...9, Okt. 1992; (2): Telcom Report 16 (1993), Nr. 1, J. H. Koch: "Digitaler Komfort für schnurlose Telekommunikation - DECT-Standard eröffnet neue Nutzungsgebiete", Seiten 26 und 27; (3): tec 2*/*93 - Das technische Magazin von Ascom "Wege zur universellen mobilen Telekommunikation", Seiten 35 bis 42; **(4)**: Philips Telecommunicatian Review, Vol. 49, No. 3, Sept. 1991, R.J. Mulder: "DECT, a universal cordless access system"; **(5)**: WO 93*/*21719 (FIG 1 bis 3 mit dazugehöriger Beschreibung)*] oder GAP-Systeme (**G**eneric **A**ccess **P**rofile; *vgl. ETSI-Publikation ETS 300444, December 1995, ETSI, FR)*, die beispielsweise gemäß der Darstellung in FIGUR 1 aufgebaut sein können. Der GAP-Standard ist eine Untermenge des DECT-Standards, dem die Aufgabe zukommt, die Interoperabilität der DECT-Luftschnittstelle für Telefonanwendungen sicherzustellen.

Nach dem DECT/GAP-Standard können gemäß der Darstellung in FIGUR 1 an einer DECT/GAP-Basisstation BS über eine für den Frequenzbereich zwischen 1,88 und 1,90 GHz ausgelegte DECT/GAP-Luftschnittstelle maximal 12 Verbindungen nach dem TDMA/FDMA/TDD-Verfahren (**T**ime **D**ivision **M**ultiple **A**ccess/**F**requency **D**ivision **M**ultiple **A**ccess/**T**ime **D**ivision **D**uplex) parallel zu DECT/GAP-Mobilteilen MT1...MT12 aufgebaut werden. Die Zahl 12 ergibt sich aus einer Anzahl "k" von für den Duplexbetrieb eines DECT/GAP-Systems zur Verfügung stehenden Zeitschlitzen bzw. Telekommunikationskanälen (k = 12). Die Verbindungen können dabei intern und/oder extern sein. Bei einer internen Verbindung können zwei an der Basisstation BS registrierte Mobilteile, z.B. das Mobilteil MT2 und das Mobilteil MT3, miteinander kommunizieren. Für den Aufbau einer externen Verbindung ist die Basisstation BS mit einem Telekommunikationsnetz TKN, z.B. in leitungsgebundener Form über eine Telekommunikationsanschlußeinheit TAE bzw. eine Nebenstellenanlage NStA mit einem leitungsgebundenen Telekommunikationsnetz oder gemäß der WO 95/05040 in drahtloser Form als Repeaterstation mit einem übergeordneten Telekommunikationsnetz, verbunden. Bei der externen Verbindung kann man mit einem Mobilteil, z.B. mit dem Mobilteil MT1, über die Basisstation BS, die Telekommunikationsanschlußeinheit TAE bzw. Nebenstellenanlage NStA mit einem Teilnehmer in dem Telekommunikationsnetz TKN kommunizieren. Besitzt die Basisstation BS - wie im Fall des Gigaset 951 (Siemens Schnurlostelefon, vgl. telcom Report 16, (1993) Heft 1, Seiten 26 und 27) - nur einen Anschluß zu der Telekommunikationsanschlußeinheit TAE bzw. der Nebenstellenanlage NStA, so kann nur eine externe Verbindung aufgebaut werden. Hat die Basisstatioh BS - wie im Fall des Gigaset 952 (Siemens Schnurlostelefon; vgl. telcom Report 16, (1993), Heft 1, Seiten 26 und 27) - zwei Anschlüsse zu dem Telekommunikationsnetz TKN, so ist zusätzlich zu der externen Verbindung mit dem Mobilteil MT1 eine weitere externe Verbindung von einem an die Basisstation BS angeschlossenen leitungsgebundenen Telekommunikationsendgerät TKE möglich. Dabei ist es prinzipiell auch vorstellbar, daß ein zweites Mobilteil, z.B. das Mobilteil MT12, anstelle des Telekommunikationsendgerätes TKE den zweiten Anschluß für eine externe Verbindung nutzt. Während die Mobilteile MT1...MT12 mit einer Batterie oder einem Akkumulator betrieben werden, ist die als schnurlose Klein-Vermittlungsanlage ausgebildete Basisstation BS über ein Netzanschlußgerät NAG an ein Spannungsnetz SPN angeschlossen.

FIGUR 2 zeigt ausgehend von der Druckschrift *Components 31 (1993), Heft 6, Seiten 215 bis 218; S. Althammer, D. Brückmann: "Hochoptimierte IC's für DECT-Schnurlostelefone"* den prinzipiellen Schaltungsaufbau der Basisstation BS und des Mobilteils MT. Die Basisstation BS und das Mobilteil MT weisen danach ein Funkteil FKT mit einer zum Senden und Empfangen von Funksignalen zugeordneten Antenne ANT, eine Signalverarbeitungseinrichtung SVE und eine Zentrale Steuerung ZST auf, die in der dargestellten Weise miteinander verbunden sind. In dem Funkteil FKT sind im wesentlichen die bekannten Einrichtungen wie Sender SE, Empfänger EM und Synthesizer SYN enthalten. In der Signalverarbeitungseinrichtung SVE ist u.a. eine Kodier-/Dekodiereinrichtung CODEC enthalten. Die Zentrale Steuerung ZST weist sowohl für die Basisstation BS als für das Mobilteil MT einen Mikroprozessor µP mit einem nach dem OSI/ISO-Schichtenmodell [*vgl*. ***(1)**: Unterrichtsblätter - Deutsche Telekom, Jg. 48, 2*/*1995, Seiten 102 bis 111; **(2)**: ETSI-Publikation ETS 300175-1*...*9, Oktober 1992*] aufgebauten Programmodul PGM, einen Signalsteuerungsteil SST und einen Digitalen Signalprozessor DSP auf, die in der dargestellten Weise miteinander verbunden sind. Von den im Schichtenmodell definierten Schichten sind nur die unmittelbar für die Basisstation BS und das Mobilteil MT wesentlichen ersten vier Schichten dargestellt. Das Signalsteuerungssteil SST ist in der Basisstation BS als Time Switch Controller TSC und in dem Mobilteil MT als Burst Mode Controller BMC ausgebildet. Der wesentliche Unterschied zwischen den beiden Signalsteuerungsteilen TSC, BMC besteht darin, daß der basisstationsspezifische Signalsteuerungsteil TSC gegenüber dem mobilteilspezifischen Signalsteuerungsteil BMC zusätzlich Vermittlungsfunktionen (Switch-Funktionen) übernimmt.

Die prinzipielle Funktionsweise der vorstehend aufgeführten Schaltungseinheiten ist beispielsweise in der vorstehend zitierten Druckschrift *Components 31 (1993), Heft 6, Seiten 215 bis 218* beschrieben.

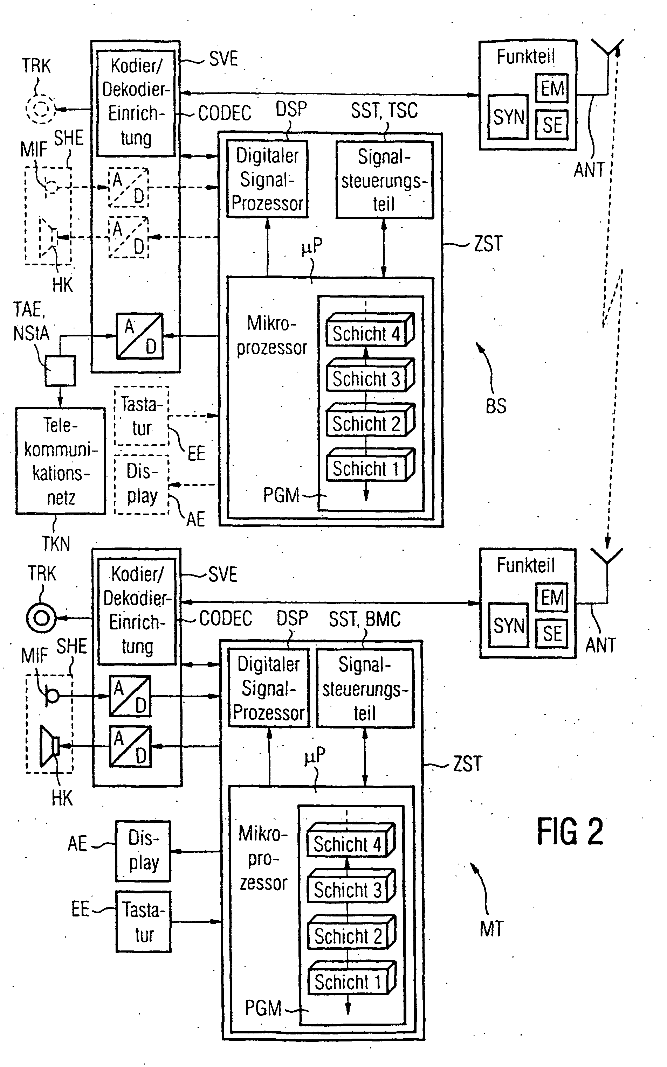

Der beschriebene Schaltungsaufbau nach FIGUR 2 wird bei der Basisstation BS und dem Mobilteil MT gemäß deren Funktion in dem DECT/GAP-System nach FIGUR 1 durch zusätzliche Funktionseinheiten ergänzt.

Die Basisstation BS ist über die Signalverarbeitungseinrichtung SVE und der Telekommunikationsanschlußeinheit TAE bzw. der Nebenstellenanlage NStA mit dem Telekommunikationsnetz TKN verbunden. Als Option kann die Basisstation BS noch eine Bedienoberfläche aufweisen (in FIGUR 2 gestrichelt eingezeichnete Funktionseinheiten), die z.B. aus einer als Tastatur ausgebildeten Eingabeeinrichtung EE, einer als Display ausgebildeten Anzeigeeinrichtung AE, einer als Händapparat mit Mikrofon MIF und Hörkapsel HK ausgebildeten Sprech-/Höreinrichtung SHE sowie einer Tonrufklingel TRK besteht.

Das Mobilteil MT weist die bei der Basisstation BS als Option mögliche Bedienoberfläche mit den zu dieser Bedienoberfläche gehörenden vorstehend beschriebenen Bedienelementen auf.

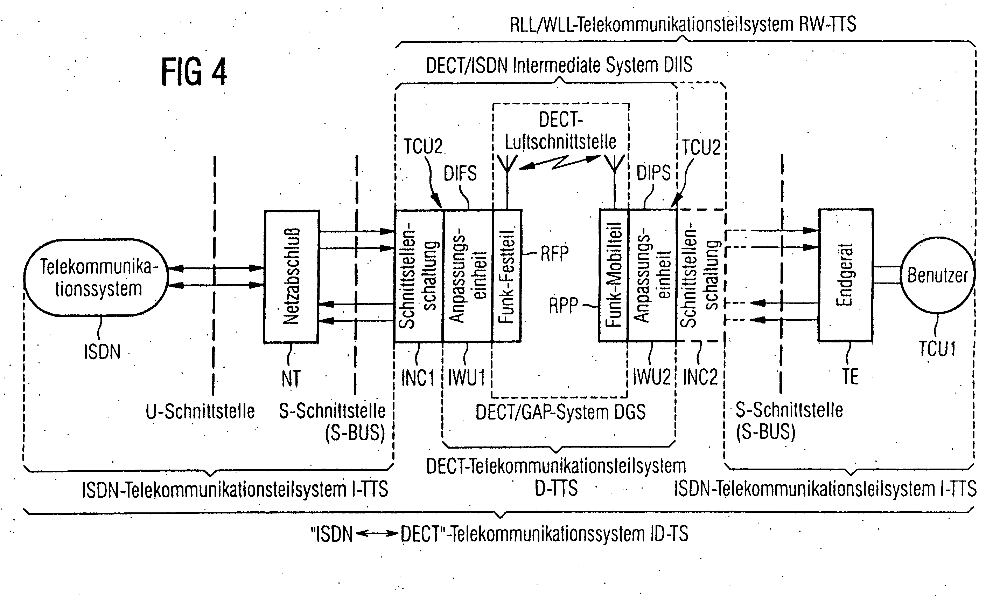

FIGUR 3 zeigt ausgehend von dem DECT-System nach FIGUR 1 ein zellulares DECT/GAP-Multisystem CMI (**C**ordless **M**ulticell **I**ntegration), bei dem mehrere der vorstehend beschriebenen DECT/GAP-Systeme TKS mit jeweils einer Basisstation BS und einem/mehreren Mobilteil/en MT an einen beliebigen geographischen Ort, z.B. in einem Verwaltungsgebäude mit großräumigen Etagenbüros, konzentriert - im Sinne einer "Hot Spot"-Anordnung - vorhanden sind. Statt eines "geschlossenen" geographischen Ortes, wie das Verwaltungsgebäude, ist aber auch ein "offener" geographischer Ort mit strategischer Telekommunikationsbedeutung, z.B. Plätze in Großstädten mit einem hohen Verkehrsaufkommen, einer großen Ansammlung von Gewerbeeinheiten und einer 'großen Bewegung von Menschen, für die Installation eines zellularen DECT/GAP-Multisystems CMI möglich. Ein Teil der in dem Großraumbüro angeordneten Basisstationen BS sind dabei im Unterschied zu den in den FIGUREN 1 und 2 gezeigten Basisstationen gemäß der WO 94/10764 als Antenna Diversity-Basisstationen ausgebildet. Die Konzentration der DECT/GAP-Systeme TKS ist dabei so ausgeprägt (lückenlose Funkabdeckung des geographischen Ortes), daß einzelne DECT/GAP-Systeme TKS durch die sich überlappenden zellularen DECT/GAP-Funkbereiche FB in der gleichen.Umgebung arbeiten.

Gleiche Umgebung kann dabei je nach Überlappungsgrad bedeuten, daß
a) eine erste Basisstation BS1 eines ersten Telekommunikationssystems TKS1 in einem ersten Funkbereich FB1 und eine zweite Basisstation BS2 eines zweiten Telekommunikationssystems TKS2 in einem zweiten Funkbereich FB2 angeordnet sind und Telekommunikationsverbindungen zu mindestens einem Mobilteil MT_{1,2} aufbauen können,
b) eine dritte Basisstation BS3 eines dritten Telekommunikationssystems TKS3 und eine vierte Basisstation BS4 eines vierten Telekommunikationssystems TKS4 in einem gemeinsamen dritten Funkbereich FB3 angeordnet sind und Telekommunikationsverbindungen zu mindestens einem Mobilteil MT_{3,4} aufbauen können.

Das in den FIGUREN 1 bis 3 dargestellte Schnurlos-Telekommunikations-Szenario, bei dem DECT-Mobilteile über eine DECT-Luftschnittstelle mit einer privaten (residential) DECT-Basisstation (FIGUR 1) bzw. mit einer oder mehreren privaten oder öffentlichen (public) DECT-Basisstationen (FIGUR 3) verbindbar sind, kann nun gemäß der Publikation *"Vortrag von A. Elberse, M. Barry, G. Fleming zum Thema: "DECT Da ta Services - DECT in Fixed and Mobile Networks", 17.*/*18. Juni 1996, Hotel Sofitel, Paris; Seiten 1 bis 12 und Zusammenfassung"* dahingehend erweitert werden, daß die DECT-Mobilteile über die DECT-Luftschnittstelle mit privaten und öffentlichen DECT-Basisstationen verbindbar sind.

Dieses Szenario kann nun gemäß der WO95/05040 (vgl. Figuren 3 bis 8 mit der jeweils dazugehörigen Beschreibung) im Hinblick auf ein "**U**niverselles **M**obil-**T**elekommunikations-**S**ystem" (UMTS) wiederum dahingehend erweitert werden, daß pikozellenbezogene Schnurlos-Telekommunikationssysteme (z.B. die bisher diskutierten DECT-Systeme unter CTM-Gesichtspunkten *(**C**ordless **T**erminal **M**obility; vgl. ETSI-Publikationen (1): "IN Architecture and Functionality for the support of CTM*", *Draft Version 1.10,* September *1995; (2) : "Cordless Terminal Mobility (CTM) - Phase 1, Service Description", Draft DE*/*NA-010039, Version 6, 2.Oktober 1995)* in eine übergeordnete Netzinfrastruktur (z.B. ISDN-, PSTN-, GSM- und/oder Satelliten-Netze) für Zu*griffe (vgl. ETSI-Publikation "CTM **A**ccess **P**rofile (CAP)" prETS 300824, November 1996)* einzubinden. Dies kann - gemäß dem Patentanspruch 1 der WO95/05040 durch eine als DECT-Repeater ausgebildete DECT-Basisstation erreicht werden. In einem universellen Mobil-Telekommunikationssystem wird DECT vorrangig als eine "Netzzugriffstechnologie" für mobile Kommunikationsdienste *(vgl. Vortrag von A. Elberse, M. Barry, G. Fleming zum Thema: "DECT Data Services - DECT in Fixed and Mobile Networks", 17.*/*18. Juni 1996, Hotel Sofitel, Paris; Seiten 1 bis 12 und Zusammenfassung)* und nicht als Netz verstanden.

Stellvertretend für das vorstehend vorgestellte Szenario zeigt FIGUR 4 -ausgehend von den Druckschriften *"Nachrichtentechnik Elektronik, Berlin 45, (1995), Heft 1, Seiten 21 bis 23 und Heft 3, Sei ten 29 und 30" sowie IEE Colloquium 1993, 173; (1993), Seiten 29*/*1 - 29*/*7; W. Hing, F.Halsall: "Cordless access to the ISDN basic rate service*" auf der Basis eines **D**ECT/**I**SDN **I**ntermediate **S**ystems DIIS gemäß *der ETSI-Publikation prETS 300822, Februar 1997 -* ein "ISDN ↔ **D**ECT"-**T**elekommunikationssystem ID-TS (**I**ntegrated **S**ervices **D**igital **N**etwork ↔ **D**igital **E**nhanced **C**ordless **T**elecommunication) mit einem ISDN-Telekommunikationsteilsystem I-TTS [*vgl*. *Druckschrift "Nachrichtentechnik Elektronik, Berlin 41-43, **T**eil: 1 bis 10, **T**1: (1991) Heft 3, Seiten 99 bis 102; **T**2:* *(1991) Heft 4, Sei ten 138 bis 143; T3: (1991) Heft 5, Seiten 179 bis 182 und Heft 6, Seiten 219 bis 220; **T**4: (1991) Heft 6, Seiten 220 bi s 222 und (1992) Heft 1, Seiten 19 bis 20; **T**5: (1992) Heft 2, Seiten 59 bi s 62 und (1992) Heft 3, Seiten 99 bis 102; **T**6: (1992) Heft 4, Seiten 150 bis 153; **T**7: (1992) Heft 6, Seiten 238 bis 241; **T**8: (1993) Heft 1, Seiten 29 bis 33; **T**9: (1993) Heft 2, Seiten 95 bis 97 und (1993) Heft 3, Seiten 129 bis 135; **T**10: (1993) Heft 4, Seiten 187 bis 190;*"] und einem DECT-**T**elekommunikationsteilsystem D-TTS.

Das DECT-Telekommunikationsteilsystem D-TTS kann dabei - wie im weiteren näher ausgeführt werden wird - Bestandteil eines DECT/ISDN Intermediate Sysems DIIS bzw. eines RLL/WLL-Telekommunikationsteilsystems RW-TTS sein. Das DECT-Telekommunikationsteilsystem D-TTS und somit das DECT/ISDN Intermediate System DIIS bzw. das RLL/WLL-Telekommunikationsteilsystem RW-TTS basieren vorzugsweise auf ein DECT/GAP-System DGS wie es beispielsweise in FIGUR 1 dargestellt ist.

Das DECT/ISDN Intermediate System DIIS bzw. das RLL/WLL-Telekommunikationsteilsystem RW-TTS kann alternativ auch auf einem GSM-System basieren (**G**roupe **S**péciale **M**obile oder **G**lobal **S**ystem for **M**obile Communication; vgl. Informatik Spektrum 14 (1991) Juni, Nr. 3, Berlin, DE; A.Mann: "Der GSM-Standard - Grundlage für digitale europäische Mobilfunknetze", Seiten 137 bis 152). Stattdessen ist es im Rahmen eines hybriden Telekommunikationssystems auch möglich, daß das ISDN-Telekommunikationsteilsystem I-TTS als GSM-System oder als PSTN-System (**P**ublic **S**witched **T**elecommunications **N**etwork) ausgebildet ist.

Darüber hinaus kommen als weitere Möglichkeiten für die Realisierung des DECT/ISDN Intermediate System DIIS bzw. des RLL/WLL-Telekommunikationsteilsystems RW-TTS oder des ISDN-Telekommunikationsteilsystems I-TTS die eingangs erwähnten Systeme sowie zukünftige Systeme in Frage, die auf die bekannten Vielfachzugriffsmethoden FDMA, TDMA, CDMA (**F**requency **D**ivision **M**ultiple **A**ccess, **T**ime **D**ivision **M**ultiple **A**ccess, **C**ode **D**ivision **M**ultiple **A**ccess) und hieraus gebildete hybride Vielfachzugriffsmethoden basieren.

Die Verwendung von Funkkanälen (z. B. DECT-Kanälen) in klassischen leitungsgebundenen Telekommunikationssystemen, wie dem ISDN, (RLL/WLL-Szenario) gewinnt zunehmend an Bedeutung, insbesondere vor dem Hintergrund zukünftiger alternativer Netzbetreiber ohne eigenes komplettes Drahtnetz.

So sollen z. B. bei dem RLL/WLL-Telekommunikationsteilsystem RW-TTS die drahtlose Anschlußtechnik RLL/WLL (**R**adio in the **L**ocal Loop/**W**ireless in the **L**ocal **L**oop) z.B. unter der Einbindung des DECT-Systems DS dem ISDN-Teilnehmer ISDN-Dienste an Standard-ISDN-Schnittstellen verfügbar gemacht werden (vgl. FIGUR 4).

In dem "ISDN ↔ DECT"-Telekommunikationssystem ID-TS nach FIGUR 4 ist zum einen ein erster Telekommunikationsteilnehmer (Benutzer) TCU1 (**T**ele-**C**ommunication **U**ser) mit seinem Endgerät TE (**T**erminal **E**ndpoint; **T**erminal **E**quipment) z.B. über eine standardisierte S-Schnittstelle (S-BUS), das als lokale Nachrichtenübertragungsschleife ausgebildete - vorzugsweise DECTspezifische und in dem RLL/WLL-Telekommunikationsteilsystem RW-TTS enthaltene - DECT/ISDN Intermediate System DIIS, eine weitere standardisierte S-Schnittstelle (S-BUS), einen Netzabschluß NT (**N**etwork **T**ermination) und eine standardisierte U-Schnittstelle des ISDN-Telekommunikationsteilsystems I-TTS und zum anderen ein zweiter Telekommunikationsteilnehmer TCU2 als Endnutzer des DECT/ISDN Intermediate Systems DIIS in die ISDN-Welt mit den darin verfügbaren Diensten eingebunden.

Das DECT/ISDN Intermediate System DIIS besteht im wesentlichen aus zwei Telekommunikationsschnittstellen, einer ersten Telekommunikationsschnittstelle DIFS (**D**ECT **I**ntermediate **F**ixed **S**ystem) und einer zweiten Telekommunikationsschnittstelle DIPS (D**E**CT **I**ntermediate **P**ortable **S**ystem), die drahtlos, z.B. über eine DECT-Luftschnittstelle, miteinander verbunden sind. Wegen der quasi-ortsgebundenen ersten Telekommunikationsschnittstelle DIFS bildet das DECT/ISDN Intermediate System DIIS die vorstehend in diesem Zusammenhang definierte lokale Nachrichtenübertragungsschleife. Die erste Telekommunikationsschnittstelle DIFS enthält ein Funk-Festteil RFP (**R**adio **F**ixed **P**art), eine Anpassungseinheit IWU1 (**I**nter**W**orking **U**nit) und eine Schnittstellenschaltung INC1 (**I**Nterface **C**ircuitry) zur S-Schnittstelle. Die zweite Telekommunikationsschnittstelle DIPS enthält ein Funk-Mobilteil RPP (**R**adio **P**ortable **P**art) und eine Anpassungseinheit IWU2 (**I**nter**W**orking **U**nit) und gegebenenfalls eine Schnittstellenschaltung INC2 (**IN**terface **C**ircuitry) zur S-Schnittstelle. Das Funk-Festteil RFP und das Funk-Mobilteil RPP bilden dabei das bekannte DECT/GAP-System DGS.

Die 'FIGUR 4 zeigt - wie bereits erwähnt - zum einen (1. Möglichkeit) als typisches RLL/WLL-Szenario wie das DECT/ISDN Intermediate System DIIS im Rahmen des RLL/WLL-Telekommunikationsteilsystem RW-TTS in das ISDN-Telekömmunikationsteilsystem I-TTS als lokale Nachrichtenübertragungsschleife eingebunden ist und zum anderen (2. Möglichkeit) wie das DECT/ISDN Intermediate System DIIS unter CAP-Gesichtspunkten (**C**ordless Terminal Mobility **A**ccess **P**rofile) nur netzseitig mit dem ISDN-Telekommunikationsteilsystem I-TTS verbunden ist. Bei der 2. Möglichkeit ist die Schnittstellenschaltung INC2 der zweiten Telekommunikationsschnittstelle DIPS zur S-Schnittstelle nicht aktiv oder überhaupt nicht vorhanden. Um diesen Sachverhalt insgesamt grafisch darzustellen und zu untermauern, ist die Schnittstellenschaltung INC2 der zweiten Telekommunikationsschnittstelle DIPS gestrichelt gezeichnet. Während die zweite Telekommunikationsschnittstelle DIPS bei der 1. Möglichkeit beispielsweise nicht mobilteilspezifisch, d.h. mit Bedienoberfläche, ausgebildet ist, ist die zweite Telekommunikationsschnittstelle DIPS bei der 2. Möglichkeit als typisches Mobilteil mit einer Bedienoberfläche ausgebildet.

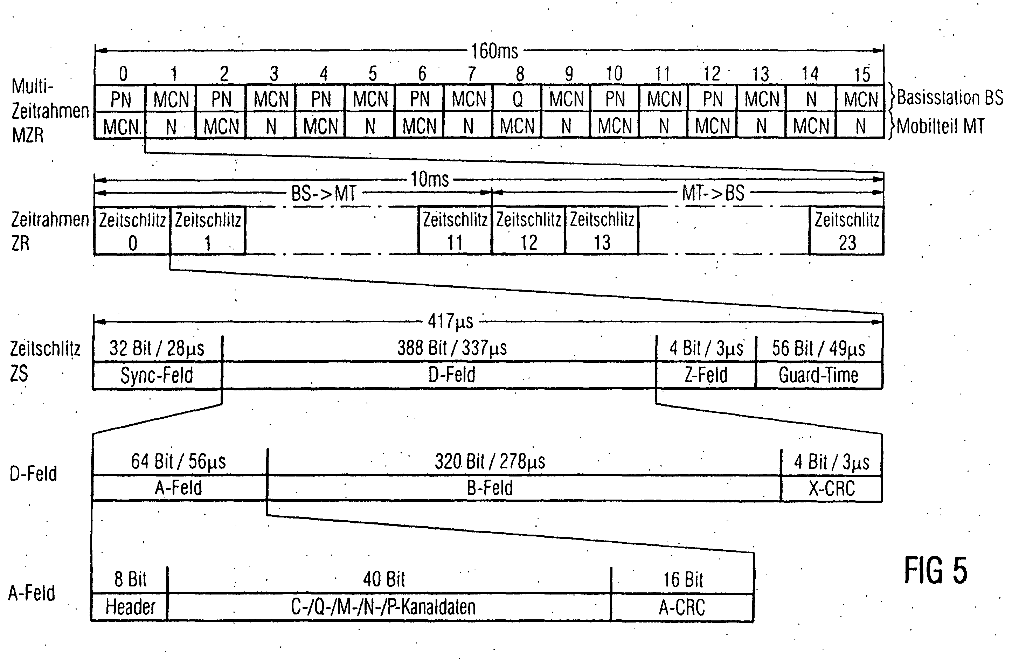

FIGUR 5 zeigt in Anlehnung an die Druckschrift "Nachrichtentechnik Elektronik 42 (1992) Jan./Feb., Nr. 1, Berlin, DE; U. Pilger: "Struktur des DECT-Standards", Seiten 23 bis 29 in Verbindung mit ETS 300 175-1...9, Oktober 1992" die TDMA-Struktur des DECT/GAP-Systems DGS. Das DECT/GAP-System ist ein bezüglich der Vielfachzugriffsverfahren hybrides System, bei dem nach dem FDMA-Prinzip auf zehn Frequenzen im Frequenzband zwischen 1,88 und 1,9 GHz Funknachrichten nach dem TDMA-Prinzip gemäß FIGUR 5 in einer vorgegebenen zeitlichen Abfolge von der Basisstation BS zum Mobilteil MT und vom Mobilteil MT zur Basisstation BS (Time Division Duplex-Betrieb) gesendet werden können. Die zeitliche Abfolge wird dabei von einem Multi-Zeitrahmen MZR bestimmt, der alle 160 ms auftritt und der 16 Zeitrahmen ZR mit jeweils einer Zeitdauer von 10 ms aufweist. In diesen Zeitrahmen ZR werden nach Basisstation BS und Mobilteil MT getrennt Informationen übertragen, die einen im DECT-Standard definierten C-, M-, N-, P-, Q-Kanal betreffen. Werden in einem Zeitrahmen ZR Informationen für mehrere dieser Kanäle übertragen, so erfolgt die Übertragung nach einer Prioritätenliste mit M > C > N und P > N. Jeder der 16 Zeitrahmen ZR des Multi-Zeitrahmens MZR unterteilt sich wiederum in 24 Zeitschlitze ZS mit.jeweils einer Zeitdauer von 417 µs, von denen 12 Zeitschlitze ZS (Zeitschlitze 0 ... 11) für die Übertragungsrichtung "Basisstation BS → Mobilteil MT" und weitere 12 Zeitschlitze ZS (Zeitschlitze 12 ... 23) für die Übertragungsrichtung "Mobilteil MT → Basisstation BS" bestimmt sind. In jedem dieser Zeitschlitze ZS werden nach dem DECT-Standard Informationen mit einer Bitlänge von 480 Bit übertragen. Von diesen 480 Bit werden 32 Bit als Synchronisationsinformation in einem SYNC-Feld und 388 Bit als Nutzinformation in einem D-Feld übertragen. Die restlichen 60 Bit werden als Zusatzinformationen in einem Z-Feld und als Schutzinformationen in einem Feld "Guard-Time" übertragen. Die als Nutzinformationen übertragenen 388 Bit des D-Feldes unterteilen sich wiederum in ein 64 Bit langes A-Feld, ein 320 Bit langes B-Feld und ein 4 Bit langes "X-CRC"-Wort.

Das 64 Bit lange A-Feld setzt sich aus einem 8 Bit langen Datenkopf (Header), einem 40 Bit langen Datensatz mit Daten für die C-,Q-,M-,N-,P-Kanäle und einem 16 Bit langen "A-CRC"-Wort zusammen.

Für den Aufbau von Telekommunikationsverbindungen zwischen der/den Basisstation/en BS und den Mobilteilen MT in den DECT-Systemen gemäß den FIGUREN 1 bis 5 ist nach dem DECT-Standard beispielsweise die nachfolgend beschriebene Prozedur vorgesehen.

Die Basisstation BS (**R**adio **F**ixed **P**art RFP) gemäß den FIGUREN 1 bis 5 sendet über die DECT-Luftschnittstelle in regelmäßigen Zeitabständen auf Simplex-Übertragungswegen, den sogenannten Dummy-Bearer, Broadcast-Informationen, die von dem Mobilteil MT (**R**adio **P**ortable **P**art RPP) gemäß den FIGUREN 1 bis 5 empfangen werden und diesem für die Synchronisation und den Verbindungsaufbau mit der Basisstation dienen. Die Broadcast-Informationen müssen nicht unbedingt auf einen Dummy-Übertragungsweg (Dummy Bearer) gesendet werden.

Es ist auch möglich, daß kein Dummy-Übertragungsweg vorhanden ist, weil die Basisstatiön bereits mindestens eine Telekommunikationsverbindung, einen sogenannten Traffic-Übertragungsweg (Traffic-Bearer), zu einem anderen Mobilteil unterhält und auf dem es dann die nötigen Broadcast-Informationen sendet. In diesem Fall kann das Mobilteil MT,' RPP, das eine Telekommunikationsverbindung zu der Basisstation BS, RFP haben möchte, die Broadcast-Informationen - wie beim Übertragen der Broadcast-Informationen auf dem Dummy-Übertragungsweg - empfangen.

Der Verbindungsaufbau durch das Mobilteil MT, RPP erfolgt nach den Regeln der Kanalselektion (vgl. ETSI-Publikation ETS 300175-5, Oktober 1992, Kapitel 9 und insbesondere Kapitel 9.3), wonach ein neuer Kanal für den Aufbau einer neuen Verbindung selektiert und eine Verbindungsanforderung (CC-SETUP) zur Basisstation BS, RFP abgesetzt wird.

Der Verbindungsabbau durch das Mobilteil MT, RPP geschieht dadurch, daß das Mobilteil MT, RPP eine Verbindungsauslösung (CC-RELEASE) zur Basisstation BS, RFP sendet.

Im Normalfall (z.B. keine gestörte Funkverbindung zwischen. der Basisstation BS, RFP und dem Mobilteil MT, RPP, keine Störung in der Basisstation BS, RFP etc.) werden die Verbindungsanforderung (CC-SETUP) und die Verbindungsauslösung (CC-RELEASE) durch die Basisstation BS, RFP im Rahmen einer gewöhnlichen Handshaking-Prozedur bestätigt.

Der Verbindungsaufbau und Verbindungsabbau des Mobilteils MT, RPP wird gemäß dem DECT-Standard [*vgl.: ETS 300175-5, Oktober 1992 (first edition) bzw. September 1996 (second edition), Kap. 9 und Annex A*] von Zeitzählern (Timer) überwacht, damit die entsprechenden DECT-spezifischen Call Control-Zustandsmaschinen im Fehlerfall (z.B. DECT-Basisstation BS, RFP antwortet nicht) in einen definierten Zustand zurückfallen.

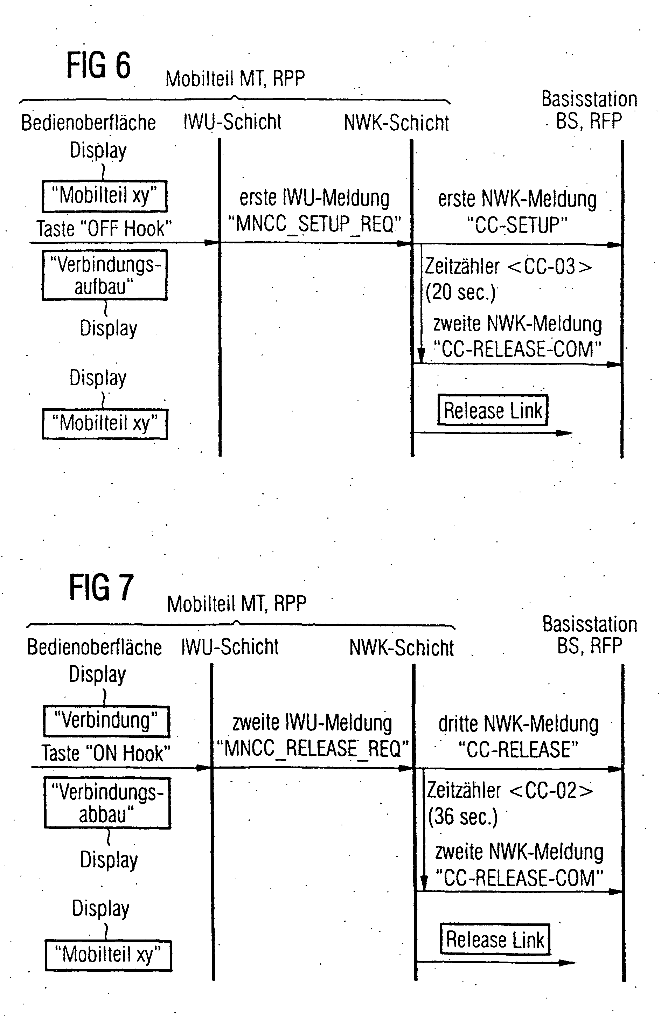

FIGUR 6 zeigt das Meldungsflußdiagramm für den Verbindungsaufbau, bei dem die Basisstation BS, RFP nach einer von dem Mobilteil MT, RPP zum Aufbau der Verbindung gesendeten ersten NWK-Meldung "CC-SETUP" nicht innerhalb einer nach Maßgabe eines für den Verbindungsaufbau vorgesehenen ersten Zeitzählers <CC-03> zur Verfügung stehenden Zeit von 20 Sekunden den Verbindungsaufbau bestätigt. Für diese Zeit von 20 Sekunden wird der Verbindungsaufbau überwacht und z.B. auf dem Display des Mobilteils MT, RPP als solcher angezeigt. Läuft die angegebene Zeit ohne eine Antwort der Basisstation BS, RFP ab, so sendet das Mobilteil MT, RPP daraufhin eine zweite NWK-Meldung "CC-RELEASE-COM" zur Basisstation BS, RFP mit der es den Verbindungsaufbau automatisch abbricht und als Folge davon den physikalischen Kanal abbaut (release link).

Bevor das Mobilteil MT, RPP die erste NWK-Meldung "CC-SETUP" an die Basisstation BS, RFP sendet, wird auf der Bedienoberfläche des Mobilteils MT, RPP zum Anstoßen des Verbindungsaufbaus als erste Bedienprozedur die Taste "OFF HOOK" betätigt, worauf im Mobilteil MT, RPP gemäß dem DECT-Protokoll nach dem ISO/OSI-Schichtenmodell von der IWU-Schicht zur NWK-Schicht eine erste IWU-Meldung "MNCC_SETUP_REQ" übertragen wird.

FIGUR 7 zeigt das Meldungsflußdiagramm für den Verbindungsabbau, bei dem die Basisstation BS, RFP nach einer von dem Mobilteil MT, RPP zum Abbau der Verbindung gesendeten dritten NWK-Meldung "CC-RELEASE" nicht innerhalb einer nach Maßgabe eines für den Verbindungsabbau vorgesehenen zweiten Zeitzählers <CC-02> zur Verfügung stehenden Zeit von 36 Sekunden den Verbindungsabbau bestätigt. Für diese Zeit von 36 Sekunden wird der Verbindungsabbau überwacht und z.B. auf dem Display des Mobilteils MT, RPP als solcher angezeigt. Läuft die angegebene Zeit ohne eine Antwort der Basisstation BS, RFP ab, so sendet das Mobilteil MT, RPP daraufhin die zweite NWK-Meldung "CC-RELEASE-COM" zur Basisstation BS, RFP mit der es den Verbindungsabbau automatisch abbricht und als Folge davon den physikalischen Kanal abbaut (release link).

Bevor das Mobilteil MT, RPP die dritte NWK-Meldung "CC-RELEASE" an die Basisstation BS, RFP sendet, wird auf der Bedienoberfläche des Mobilteils MT, RPP zum Anstoßen des Verbindungsabbaus die Taste "ON HOOK" betätigt, worauf im Mobilteil MT, RPP gemäß dem DECT-Protokoll nach dem ISO/OSI-Schichtenmodell von der IWU-Schicht zur NWK-Schicht eine zweite IWU-Meldung "MNCC_RELEASE_REQ" übertragen wird.

Die Dauer von 20 bzw. 36 Sekunden Zählzeit für die Zeitzähler <CC-03>>, <CC-02> empfindet jedoch der Benutzer des Mobilteils MT, RPP aus seiner Sicht häufig als zu lang. In der Zwischenzeit könnte er jeweils schon wieder einen neuen Verbihdungsaufbau starten.

Ausgehend von FIGUR 6 für den Verbindungsaufbau ist es bei Siemens GSM-Mobiltelefonen bekannt, einen mobilteilseitig mit der Taste "OFF HOOK" (grüne Taste) eingeleiteten Verbindungsaufbau vorzeitig, d.h. vor Ablauf der Zählzeit des entsprechenden Zeitzählers, mit der Taste "ON HOOK" (rote Taste) abzubrechen.

Für den Verbindungsabbau gemäß FIGUR 7 gibt es vergleichbare Bedienprozeduren für einen vorzeitigen Abbruch eines Verbindungsabbaus weder bei Mobilfunktelefonen (z.B. nach dem GSM-Standard) noch bei Schnurlos-Mobilteilen (z.B. nach dem DECT-Standard). Dies liegt daran, daß ein vorzeitiger Verbindungsabbau auf der Basis der jeweiligen Standards zumindest bis heute nicht erlaubt ist.

Die der Erfindung zugrundeliegende Aufgabe besteht darin, das benutzergesteuerte Abbauen von drahtlosen Telekommunikationsverbindungen in drahtlosen Telekommunikationssystemen, insbesondere DECT-Systemen, bedienerfreundlich und -akzeptabel auszulösen.

Diese Aufgabe wird durch die Merkmale des Patentanspruches 1 gelöst.

Die der Erfindung zugrundeliegende Idee besteht darin, daß einmal aufgebaute Verbindungen zwischen durch drahtlose Telekommunikation verbindbaren Telekommunikationsgeräten in drahtlosen Telekommunikationssystemen der eingangs .umrissenen Art- z.B'. DECT-Mobilteilen und DECT-Basisstationen in DECT-Systemen - in zwei Stufen durch Bedienprozeduren (zweite Bedienprozeduren), die sich von Bedienprozeduren (erste Bedienprozeduren) für den Verbindungsaufbau unterscheiden, unbedingt abgebaut bzw. abgebrochen werden.

Nach Anspruch 2 ist es von Vorteil, daß Tasten als Bedienprozeduren betätigt werden.

Nach Anspruch 3 ist es von Vorteil, daß Sprachbefehle als Bedienprozeduren eingegeben werden.

Nach Anspruch 4 ist es dabei von Vorteil, daß die Taste "OFF HOOK" als erste Bedienprozedur betätigt wird.

Nach Anspruch 5 ist es dabei von Vorteil, daß zweimal die Taste "ON HOOK" als zweite Bedienprozedur betätigt wird.

Der unbedingte Abbau bzw.Abbruch der Verbindungen zwischen den durch drahtlose Telekommunikation verbindbaren Telekommunikationsgeräten in den drahtlosen Telekommunikationssystemen kann prinzipiell unabhängig davon durchgeführt werden, ob die drahtlose Telekommunikation zwischen den Telekommunikationsgeräten gestört ist oder nicht (vorstehend erwähnte Normalfall). Nach den Ansprüchen 11 und 12 ist das Verfahren aber insbesondere dann sinnvoll, wenn die Verbindungen für den Abbau und zusätzlich sowohl für den Aufbau als für den Abbau gestört sind.

Weitere vorteilhafte Weiterbildungen der Erfindung sind in den übrigen Unteransprüchen angegeben.

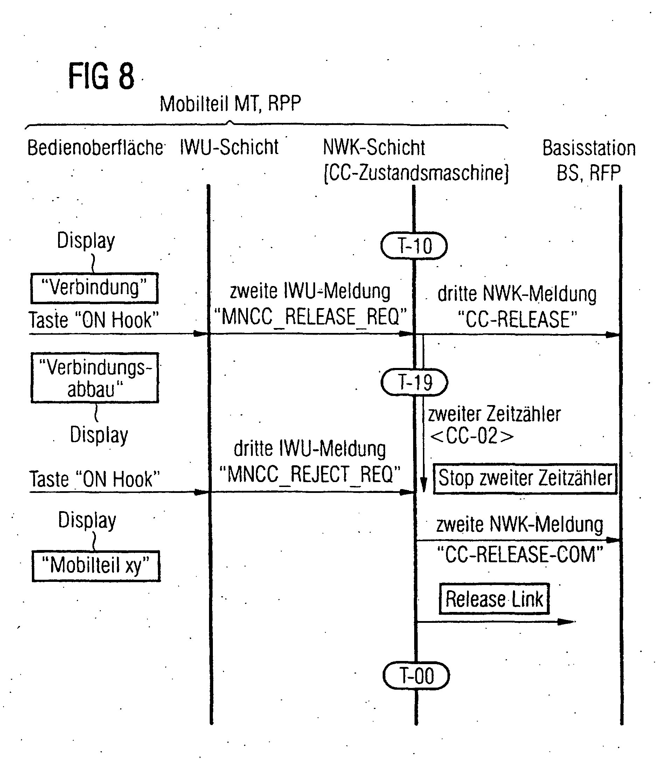

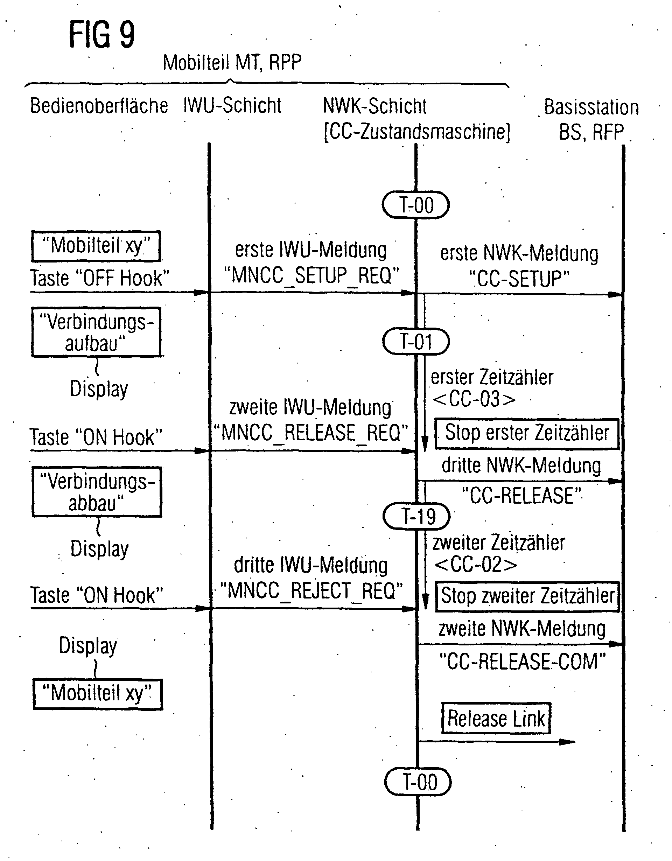

Ein Ausführungsbeispiel der Erfindung wird anhand der FIGUREN 8 und 9 erläutert. Es zeigen:
FIGUR 8 ein Meldungsflußdiagramm für einen unbedingten Verbindungsabbau bzw. für einen Verbindungsabbruch für eine bestehende Verbindung,
FIGUR 9 ein Meldungsflußdiagramm für einen unbedingten Verbindungsabbau bzw. für einen Verbindungsabbruch nach einem zuvor eingeleiteten aber noch nicht zustande gekommenen Verbindungsaufbau.
FIGUR 8 zeigt ausgehend von den FIGUREN 6 und 7 und in Verbindung mit der ETSI-Publikation ETS 300175-5, Oktober 1992, Kap. 9, Figuren 3 und 4 sowie Annex B.1 ein Meldungsflußdiagramm für einen unbedingten Verbindungsabbau bzw. für einen Verbindungsabbruch, bei dem eine herkömmlich durch das Betätigen der "OFF HOOK"-Taste als die erste Bedienprozedur aufgebaute, bestehende, gegebenenfalls vorzugsweise auf der Bedienoberfläche (z.B. Display) des Mobilteils MT, RPP mit "Verbindung" angezeigte Verbindung im CC-Zustand T-10 benutzergesteuert durch eine zweite Bedienprozedur entweder durch zweimaliges unmittelbar hintereinander Betätigen der Taste "ON HOOK" oder durch zweimaliges mit einer vorgegebenen Zeitverzögerung, die wesentlich kleiner ist als die durch den zweiten Zeitzähler <CC-02> hervorgerufene Zeitverzögerung, hintereinander Betätigen der Taste "ON HOOK" unbedingt abgebaut bzw. abgebrochen wird.

Nach dem bekannten erstmaligen Betätigen der Taste "ON HOOK" - erste Stufe der zweiten Bedienprozedur - wird im Mobilteil MT, RPP gemäß dem DECT-Protokoll nach dem ISO/OSI-Schichtenmodell von der IWU-Schicht zur NWK-Schicht die zweite IWU-Meldung "MNCC_RELEASE_REQ" übertragen. Dies löst auf der NWK-Ebene die Übertragung der dritten NWK-Meldung "CC-RELEASE" an die Basisstation BS, RFP aus. Die CC-Zustandsmaschine geht als Folge hiervon in den CC-Zustand T-19. Auf der Bedienoberfläche (z.B. Display) des Mobilteils MT, RPP wird gegebenenfalls vorzugsweise "Verbindungsabbau" angezeigt.

Wenn im Anschluß daran - wie bereits vorstehend erwähnt - entweder unmittelbar danach oder mit der vorgegebenen Zeitverzögerung die Taste "ON HOOK" ein zweites Mal - zweite Stufe der zweiten Bedienprozedur - betätigt wird, wird im Mobilteil MT, RPP gemäß dem DECT-Protokoll nach dem ISO/OSI-Schichtenmodell von der IWU-Schicht zur NWK-Schicht eine dritte IWU-Meldung "MNCC_REJECT_REQ" übertragen. Dadurch werden vom Mobilteil MT, RPP auf der NWK-Ebene der zweite Zeitzähler <CC-02> gestoppt und zurückgesetzt bzw. der Zeitzählvorgang abgebrochen und der Zeitzähler <CC-02> zurückgesetzt sowie die zweite NWK-Meldung "CC-RELEASE-COM" an die Basisstation BS, RFP übertragen, wodurch es den Verbindungsabbau automatisch abbricht und als Folge davon den physikalischen Kanal abbaut (release link). Die CC-Zustandsmaschine geht daraufhin in den Zustand T-00 über. Auf der Bedienoberfläche (z.B. Display) des Mobilteils wird gegebenenfalls "Mobilteil xy" angezeigt.

Alternativ zu den angesprochenen Tastenbetätigungen ist es bei entsprechend ausgebildetem Mobilteil (sprachgesteuerte Bedienoberfläche) auch möglich, den unbedingten Verbindungsabbau bzw. den Verbindungsabbruch sprachgesteuert (z.B. mit Sprachbefehlen "Verbindung abbauen" und "Verbindung abbrechen") durchzuführen.

Statt des zweiten Betätigens der Taste "ON HOOK" ist es auch möglich, eine andere Taste zu betätigen.

FIGUR 9 zeigt ausgehend von den FIGUREN 6 und 7 und in Verbindung mit der ETSI-Publikation ETS 300175-5, Oktober 1992, Kap. 9, Figuren 3 und 4 sowie Annex B.1 ein Meldungsflußdiagramm für einen unbedingten Verbindungsabbau bzw. für einen Verbindungsabbruch nach einem zuvor durch die erste Bedienprozedur - Betätigen der "OFF HOOK"-Taste gemäß FIGUR 6 - eingeleiteten, aber noch nicht zustande gekommenen Verbindungsaufbau, bei dem vor dem Verbindungsaufbau auf der Bedienöberfläche (z.B. Display) des Mobilteils MT, RPP gegebenenfalls "Mobilteil xy" angezeigt wird und die CC-Zustandsmaschine sich im Zustand T-00 befindet.

Wird nach FIGUR 9 in herkömmlicher Weise der Verbindungsaufbau benutzergesteuert durch die Taste "OFF HOOK" als die erste Bedienprozedur gemäß FIGUR 6 eingeleitet, so wird im Mobilteil MT, RPP gemäß dem DECT-Protokoll nach dem ISO/OSI-Schichtenmodell von der IWU-Schicht zur NWK-Schicht die erste IWU-Meldung "MNCC_SETUP_REQ" übertragen. Dies löst auf der NWK-Ebene die Übertragung der ersten NWK-Meldung "CC-SETUP" an.die Basisstation BS, RFP aus. Die CC-Zustandsmaschine geht als Folge hiervon in den CC-Zustand T-01. Auf der Bedienoberfläche (z.B. Display) des Mobilteils MT, RPP wird gegebenenfalls vorzugsweise "Verbindungsaufbau" angezeigt.

Wird im Anschluß daran entweder unmittelbar danach oder mit einer vorgegebenen Zeitverzögerung, die wesentlich kleiner ist als die durch den ersten Zeitzähler <CC-03> hervorgerufene Zeitverzögerung, benutzergesteuert durch die zweite Bedienprozedur entweder die Taste "ON HOOK" zweimal unmittelbar hintereinander betätigt oder die Taste "ON HOOK" zweimal mit einer vorgegebenen Zeitverzögerung, die wesentlich kleiner ist als die durch den zweiten Zeitzähler <CC-02> hervorgerufene Zeitverzögerung, hintereinander betätigt, dann wird die Verbindung unbedingt abgebaut bzw. abgebrochen.

Wird nach FIGUR 9 - wie bereits vorstehend erwähnt - entweder unmittelbar danach oder mit der vorgegebenen Zeitverzögerung die Taste "ON HOOK" ein erstes Mal - die erste Stufe der zweiten Bedienprozedur - betätigt, so wird im Mobilteil MT, RPP gemäß dem DECT-Protokoll nach dem ISO/OSI-Schichtenmodell von der IWU-Schicht zur NWK-Schicht die zweite IWU-Meldung "MNCC_RELEASE_REQ" übertragen. Dies hat auf der NWK-Ebene zur Folge, daß der erste Zeitzähler <CC-03> gestoppt und zurückgesetzt bzw. der Zeitzählvorgang abgebrochen und der Zeitzähler <CC-03> zurückgesetzt sowie die dritte NWK-Meldung "CC-RELEASE" an die Basisstation BS, RFP übertragen wird. Die CC-Zustandsmaschine geht als Folge hiervon in den CC-Zustand T-19. Auf der Bedienoberfläche (z.B. Display) des Mobilteils MT, RPP wird gegebenenfalls vorzugsweise "Verbindungsabbau" angezeigt.

Wenn im Anschluß daran - wie bereits vorstehend erwähnt - entweder unmittelbar danach oder mit der vorgegebenen Zeitverzögerung die Taste "ON HOOK" ein zweites Mal - die zweite Stufe der zweiten Bedienprozedur - betätigt wird, wird im Mobilteil MT, RPP gemäß dem DECT-Protokoll nach dem ISO/OSI-Schichtenmodell von der IWU-Schicht zur NWK-Schicht die dritte IWU-Meldung "MNCC_REJECT_REQ" übertragen. Dadurch werden vom Mobilteil MT, RPP auf der NWK-Ebene der zweite Zeitzähler <CC-02> gestoppt und zurückgesetzt bzw. der Zeitzählvorgang abgebrochen und der Zeitzähler <CC-02> zurückgesetzt sowie die zweite NWK-Meldung "CC-RELEASE-COM" an die Basisstation BS, RFP übertragen, wodurch es den Verbindungsabbau automatisch abbricht und als Folge davon den physikalischen Kanal abbaut (release link). Die CC-Zustandsmaschine geht daraufhin in den Zustand T-00 über und auf der Bedienoberfläche (z.B. Display) des Mobilteils MT, RPP wird gegebenenfalls "Mobilteil xy" angezeigt.

Alternativ zu den angesprochenen Tastenbetätigungen ist es bei entsprechend ausgebildetem Mobilteil (sprachgesteuerte Bedienoberfläche) auch wieder möglich, den Verbindungsaufbau sowie den unbedingten Verbindungsabbau bzw-. den Verbindungsabbruch sprachgesteuert (z.B. mit Sprachbefehlen "Verbindung aufbauen", "Verbindung abbauen" und "Verbindung abbrechen") durchzuführen.

Statt des zweiten Betätigens der Taste "ON HOOK" ist es auch wieder möglich, eine andere Taste zu betätigen.

## Patentansprüche

1. Verfahren zum benutzergesteuerten Abbauen von drahtlosen Telekommunikationsverbindungen in drahtlosen Telekommunikationssystemen, insbesondere DECT-Systemen, bei dem drahtlose Telekommunikationsverbindungen zwischen ersten Telekommunikationsgeräten (MT, DIPS, RPP, IWU2, INC2, TE) und zweiten Telekommunikationsgeräten (BS, DIFS, RFP, IWU1, INC1) der Telekommunikationssysteme (TKS, DIIS, RW-TTS) durch erste Bedienprozeduren auf Bedienoberflächen der ersten Telekommunikationsgeräte (MT, DIPS, RPP, IWU2, INC2, TE) aufgebaut und durch zweite Bedienprozeduren auf den Bedienoberflächen der ersten Telekommunikationsgeräte (MT, DIPS, RPP, IWU2, INC2, TE) abgebaut werden, wobei die ersten Bedienprozeduren vorgegebene den Verbindungsaufbau signalisierende und die zweiten Bedienprozeduren vorgegebene den Verbindungsabbau signalisierende Meldungsflüsse von den ersten Telekommunikationsgeräten (MT, DIPS, RPP, IWU2, INC2) zu den zweiten Telekommunikationsgeräten (BS, DIPS, RFP, IWU1, INC1) auslösen,
**dadurch gekennzeichnet, daß**
die drahtlose Telekommunikationsverbindungen durch die zweiten Bedienprozeduren in zwei Stufen unbedingt - ohne Bestätigung durch die zweiten Telekommunikationsgeräte (BS, DIPS, RFP, IWU1, INC1) oder vor dem Ablauf von den Verbindungsabbau überwachenden Zeitzählern <CC-02> - abgebaut bzw. abgebrochen werden.

2. Verfahren nach Anspruch 1, **dadurch gekennzeichnet, daß**
bei den Bedienprozeduren Tasten betätigt werden.

3. Verfahren nach Anspruch 1 oder 2, **dadurch gekennzeichnet, daß**
bei den Bedienprozeduren Sprachbefehle eingegeben werden.

4. Verfahren nach Anspruch 2, **dadurch gekennzeichnet, daß**
bei den ersten Bedienprozeduren "OFF HOOK"-Tasten betätigt werden.

5. Verfahren nach Anspruch 2, **dadurch gekennzeichnet, daß**
bei den zweiten Bedienprozeduren jeweils zweimal hintereinander "ON HOOK"-Tasten betätigt werden.

6. Verfahren nach Anspruch 3, **dadurch gekennzeichnet, daß**
bei den ersten Bedienprozeduren erste Sprachbefehle " Verbindung aufbauen" eingegeben werden.

7. Verfahren nach Anspruch 3, **dadurch gekennzeichnet, daß**
bei den zweiten Bedienprozeduren zweite Sprachbefehle " Verbindung abbauen" und dritte Sprachbefehle "Verbindung abbrechen" eingegeben werden.

8. Verfahren nach einem der Ansprüche 1 bis 7, **dadurch gekennzeichnet, daß**
DECT-Systeme als die Telekommunikationssysteme (TKS, DIIS, RW-TTS) verwendet werden, die Telekommunikationsverbindungen nach dem DECT-Luftschnittstellenprotokoll aufgebaut und unbedingt abgebaut bzw. abgebrochen werden, DECT-Mobilteile (MT, DIPS, RPP, IWU2) oder DECT-Netzabschlußbaugruppen (DIPS, RPP, IWU2, INC2) mit zugeordneten drahtgebundenen, Bedienoberflächen aufweisenden Endgeräten (TE) als die ersten Telekommunikationsgeräte (MT, DIPS, RPP, IWU2, INC2, TE) verwendet werden und DECT-Basisstationen als die zweiten Telekommunikationsgeräte (BS, DIPS, RFP, IWU1, INC1) verwendet werden.

9. Verfahren nach einem der Ansprüche 1 bis 7, **dadurch gekennzeichnet, daß**
GSM-Systeme als die Telekommunikationssysteme (TKS, DIIS, RW-TTS) verwendet werden, die Telekommunikationsverbindungen nach dem GSM-Luftschnittstellenprotokoll aufgebaut und unbedingt abgebaut bzw. abgebrochen werden, GSM-Mobilteile als die ersten Telekommunikationsgeräte (MT, DIPS, RPP, IWU2, INC2, TE) verwendet werden und GSM-Basisstationen mit zugeordneten zentralen Vermittlungseinrichtungen als die zweiten Telekommunikationsgeräte (BS, DIPS, RFP, IWU1, INC1) verwendet werden.

10. Verfahren nach einem der Ansprüche 1 bis 7, **dadurch gekennzeichnet, daß**
bezüglich der CDMA-/FDMA-/TDMA-Vielfachzugriffsmethoden hybride Systeme als die Telekominunikationssysteme (TKS, DIIS, RW-TTS) verwendet werden, die Telekommunikationsverbindungen nach dem die CDMA-/FDMA-/TDMA-Vielfachzugriffsmethoden berücksichtigenden hybriden Luftschnittstellenprotokoll aufgebaut und unbedingt abgebaut bzw. abgebrochen werden, bezüglich der CDMA-/FDMA-/TDMA-Vielfachaugriffsmethoden hybrid aufgebaute Mobilteile oder bezüglich der CDMA-/FDMA-/TDMA-Vielfachzugriffsmethoden hybrid aufgebaute Netzabschlußbaugruppen mit zugeordneten drahtgebundenen, Bedienoberflächen aufweisenden Endgeräten als die ersten Telekommunikationsgeräte (MT, DIPS, RPP, IWU2, INC2, TE) verwendet werden und bezüglich der CDMA-/FDMA-/TDMA-Vielfachzugriffsmethoden hybrid aufgebaute Basisstationen als die zweiten Telekommunikationsgeräte (BS, DIPS, RFP, IWU1, INC1) verwendet werden.

11. Verfahren nach einem der Ansprüche 1 bis 10, **dadurch gekennzeichnet, daß**
die Telekommunikationsverbindungsabbauten von den ersten Telekommunikationsgeräten (MT, DIPS, RPP, IWU2, INC2, TE) bei gestörten Telekommunikationsverbindungen zwischen den ersten Telekommunikationsgeräten (MT, DIPS, RPP, IWU2, INC2, TE) und den zweiten Telekommunikationsgeräten (BS, DIPS, RFP, IWU1, INC1) eingeleitet werden.

12. Verfahren nach einem der Ansprüche 1 bis 11, **dadurch gekennzeichnet, daß**
die Telekommunikationsverbindungsaufbauten von den ersten Telekommslnikationsgeräten (MT, DIPS, RPP, IWU2, INC2, TE) bei gestörten Telekommunikationsverbindungen zwischen den ersten Telekommunikationsgeräten (MT, DIPS, RPP, IWU2, INC2, TE) und den zweiten Telekommunikationsgeräten (BS, DIPS, RFP, IWU1, INC1) eingeleitet werden.

13. Verfahren nach Anspruch 8, **dadurch gekennzeichnet, daß**
die Telekommunikationsverbindungen nach dem DECT-Luftschnittstellenprotokoll unbedingt abgebaut bzw. abgebrochen werden, indem die DECT-Mobilteile (MT, DIPS, RPP, IWU2) oder DECT-Netzabschlußbaugruppen (DIPS, RPP, IWU2, INC2) mit den zugeordneten drahtgebundenen, Bedienoberflächen aufweisenden Endgeräten (TE), initiiert durch die zweiten Bedienprozeduren, erste NWK-Meldungen "CC-RELEASE" und zweite Meldungen "CC-RELEASE-COMplete" zu den DECT-Basisstationen (BS, DIPS, RFP, IWU1, INC1) übertragen.

14. Verfahren nach Anspruch 8, 11 oder 13, **dadurch gekennzeichnet, daß**
die Telekommunikationaverbindungsabbauten durch die ersten NMK-Meldungen "CC-RELEASE" eingeleitet werden.

15. Verfahren nach Anspruch 8 und 12, **dadurch gekennzeichnet, daß**
die Telekommunikationsverbindungsaufbauten durch dritte NWK-Meldungen "CC-SETUP" eingeleitet werden.

## Claims

1. Method for user-controlled release of wireless telecommunication connections in wireless telecommunication systems, particularly DECT systems, in which wireless telecommunication connections between first telecommunication devices (MT, DIPS, RPP, IWU2, INC2, TE) and second telecommunication devices (BS, DIFS, RFP, IWU1, INC1) of the telecommunication systems (TKS, DIIS, RW-TTS) are set up by first operating procedures at user interfaces of the first telecommunication devices (MT, DIPS, RPP, IWU2, INC2, TE) and are released by second operating procedures at the user interfaces of the first telecommunication devices (MT, DIPS, RPP, IWU2, INC2, TE), whereby the first operating procedures trigger predetermined message flows signalling the connection set-up, and the second operating procedures trigger predetermined message flows signalling the connection release, from the first telecommunication devices (MT, DIPS, RPP, IWU2, INC2) to the second telecommunication devices (BS, DIPS, RFP, IWU1, INC1),
**characterised in that**
the wireless telecommunication connections are unconditionally released or aborted in two stages by the second operating procedures without confirmation by the second telecommunication devices (BS, DIPS, RFP, IWU1, INC1) or before the expiry of time counters <CC-02> monitoring the connection release.

2. Method according to Claim 1, **characterised in that** keys are actuated in the operating procedures.

3. Method according to Claim 1 or 2, **characterised in that** voice commands are input in the operating procedures.

4. Method according to Claim 2, **characterised in that** the first operating procedures comprise the actuation of "OFF HOOK" keys.

5. Method according to Claim 2, **characterised in that** the second operating procedures comprise the actuation of "ON HOOK" keys twice in succession.

6. Method according to Claim 3, **characterised in that** the first operating procedures comprise the inputting of first voice commands "set up connection".

7. Method according to Claim 3, **characterised in that** the second operating procedures comprise the inputting of second voice commands "release connection" and of third voice commands "abort connection".

8. Method according to one of Claims 1 to 7, **characterised in that** DECT systems are used as the telecommunication systems (TKS, DIIS, RW-TTS), the telecommunication connections are set up and unconditionally released or aborted according to the DECT air interface protocol, DECT mobile parts (DIPS, RPP, IWU2) or DECT network termination modules (DIPS, RPP, IWU2, INC2) with allocated wire-bound terminal devices (TE) having user interfaces are employed as the first telecommunication devices (MT, DIPS, RPP, IWU2, INC2, TE), and DECT base stations are employed as the second telecommunication devices (BS, DIPS, RFP, IWU1, INC1).

9. Method according to one of Claims 1 to 7, **characterised in that** GSM systems are used as the telecommunication systems (TKS, DIIS, RW-TTS), the telecommunication connections are set up and unconditionally released or aborted according to the GSM air interface protocol, GSM mobile parts are employed as the first telecommunication devices (MT, DIPS, RPP, IWU2, INC2, TE), and GSM base stations with allocated, central switching devices are employed as the second telecommunication devices (BS, DIPS, RFP, IWU1, INC1).

10. Method according to one of Claims 1 to 7, **characterised in that**, with respect to the CDMA/FDMA/TDMA multiple access methods, hybrid systems are employed as the telecommunication systems (TKS, DIIS, RW-TTS), the telecommunication connections are set up and unconditionally released or aborted according to a hybrid air interface protocol that takes into account the CDMA/FDMA/TDMA multiple access methods, hybrid mobile parts with respect to the CDMA/FDMA/TDMA multiple access methods or hybrid network termination assemblies with respect to the CDMA/FDMA/TDMA multiple access methods with allocated, wire-bound terminal equipment having user interfaces are employed as the first telecommunication devices (MT, DIPS, RPP, IWU2, IN2, TE), and hybrid base stations with respect to the CDMA/FDMA/TDMA multiple access methods are employed as the second telecommunication devices (BS, DIPS, RFP, IWU1, INC1).

11. Method according to one of Claims 1 to 10, **characterised in that** the telecommunication connection releases from the first telecommunication devices (MT, DIPS, RPP, IWU2, INC2, TE) are initiated given disturbed telecommunication connections between the first telecommunication devices (MT, DIPS, RPP, IWU2, INC2, TE) and the second telecommunication devices (BS, DIPS, RFP, IWU1, INC1).

12. Method according to one of Claims 1 to 11, **characterised in that** the telecommunication connection set-ups from the first telecommunication devices (MT, DIPS, RPP, IWU2, INC2, TE) are initiated given disturbed telecommunication connections between the first telecommunication devices (MT, DIPS, RPP, IWU2, INC2, TE) and the second telecommunication devices (BS, DIPS, RFP, IWU1, INC1).

13. Method according to Claim 8, **characterised in that** the telecommunication connections are unconditionally released or aborted according to the DECT air interface protocol, **in that** the DECT mobile parts (MT, DIPS, RPP, IWU2) or DECT network termination assemblies (DIPS, RPP, IWU2, INC2) with allocated, wire-bound terminal devices (TE) including user interfaces, initiated by the second operating procedures, transmit first NWK messages "CC-RELEASE" and second messages "CC-RELEASE-COMplete" to the DECT base stations (BS, DIPS, RFP, IWU1, INC1).

14. Method according to Claim 8, 11 or 13, **characterised in that** the telecommunication connection releases are initiated by the first NWK messages "CC-RELEASE".

15. Method according to Claims 8 and 12, **characterised in that** the telecommunication connection set-ups are initiated by third NWK messages "CC-SETUP".

## Revendications

1. Procédé pour la coupure commandée par l'utilisateur de liaisons de télécommunication sans fil dans des systèmes de télécommunication sans fil, en particulier des systèmes DECT, dans lequel des liaisons de télécommunication sans fil sont établies entre des premiers appareils de télécommunication (MT, DIPS, RPP, IWU2, INC2, TE) et des seconds appareils de télécommunication (BS, DIFS, RFP, IWU1, INC1) des systèmes de télécommunication (TKS, DIIS, RW-TTS) par des premières procédures de commande sur des interfaces utilisateur des premiers appareils de télécommunication (MT, DIPS, RPP, IWU2, INC2, TE) et sont coupées par des secondes procédures de commande sur les interfaces utilisateur des premiers appareils de télécommunication (MT, DIPS, RPP, IWU2, INC2, TE), les premières procédures de commande déclenchant des flux de message prédéfinis signalant l'établissement de communication et les secondes procédures de commande des flux de message prédéfinis signalant la coupure de communication entre les premiers appareils de télécommunication (MT, DIPS, RPP, IWU2, INC2) et les seconds appareils de télécommunication (BS, DIPS, RFP, IWU1, INC1),
**caractérisé en ce que**
les liaisons de télécommunication sans fil sont coupées resp. interrompues impérativement par les secondes procédures de commande en deux étapes - sans confirmation par les seconds appareils de télécommunication (BS, DIPS, RFP, IWU1, INC1) ou avant l'expiration des compteurs de temps <CC-02> contrôlant la coupure de communication.

2. Procédé selon la revendication 1, **caractérisé en ce que**
des touches sont actionnées lors des procédures de commande.

3. Procédé selon la revendication 1 ou 2, **caractérisé en ce que**
des instructions vocales sont entrées lors des procédures de commande.

4. Procédé selon la revendication 2, **caractérisé en ce que**
des touches "OFF HOOK" sont actionnées lors des premières procédures de commande.

5. Procédé selon la revendication 2, **caractérisé en ce que**
des touches "ON HOOK" sont actionnées deux fois successivement lors des secondes procédures de commande.

6. Procédé selon la revendication 3, **caractérisé en ce que**
des premières instructions vocales "établir communication" sont entrées lors des premières procédures de commande.

7. Procédé selon la revendication 3, **caractérisé en ce que**
des secondes instructions vocales "couper communication" et des troisièmes instructions vocales "interrompre communication" sont entrées lors des secondes procédures de commande.

8. Procédé selon l'une quelconque des revendications 1 à 7, **caractérisé en ce que**
des systèmes DECT sont utilisés comme systèmes de télécommunication (TKS, DIIS, RW-TTS), les liaisons de télécommunication sont établies et interrompues resp. coupées impérativement selon le procédé de radio DECT, des parties mobiles DECT (MT, DIPS, RPP, IWU2) ou des ensembles de terminaison de réseau DECT (DIPS, RPP, IWU2, INC2) avec des terminaux (TE) attribués, reliés par fils et présentant des interfaces utilisateur sont utilisés comme premiers appareils de télécommunication (MT, DIPS, RPP, IWU2, INC2, TE) et des stations de base DECT sont utilisées comme seconds appareils de télécommunication (BS, DIPS, RFP, IWU1, INC1).

9. Procédé selon l'une quelconque des revendications 1 à 7, **caractérisé en ce que**
des systèmes GSM sont utilisés comme systèmes de télécommunication (TKS, DIIS, RW-TTS), les liaisons de télécommunication sont établies et coupées resp. interrompues impérativement selon le protocole radio GSM, des parties mobiles GSM sont utilisées comme premiers appareils de télécommunication (MT, DIPS, RPP, IWU2, INC2, TE) et des stations de base GSM avec des appareils de commutation centraux attribués sont utilisées comme seconds appareils de télécommunication (BS, DIPS, RFP, IWU1, INC1).

10. Procédé selon l'une quelconque des revendications 1 à 7, **caractérisé en ce que**
des systèmes hybrides en ce qui concerne les méthodes d'accès multiple CDMA/FDMA/TDMA sont utilisés comme systèmes de télécommunication (TKS, DIIS, RW-TTS), les liaisons de télécommunication sont établies et interrompues resp. coupées impérativement selon le protocole radio hybride prenant en compte les méthodes d'accès multiple CDMA/FDMA/TDMA, des parties mobiles à structure hybride par rapport aux méthodes d'accès multiple CDMA/FDMA/TDMA ou des ensembles de terminaison de réseau à structure hybride par rapport aux méthodes d'accès multiple CDMA/FDMA/TDMA avec des terminaux attribués, reliés par fil et présentant des interfaces utilisateur sont utilisés comme premiers appareils de télécommunication (MT, DIPS, RPP, IWU2, INC2, TE) et des stations de base à structure hybride par rapport aux méthodes d'accès multiple CDMA/FDMA/TDMA sont utilisées comme seconds appareils de télécommunication (BS, DIPS, RFP, IWU1, INC1).

11. Procédé selon l'une quelconque des revendications 1 à 10, **caractérisé en ce que**
les interruptions de liaison de télécommunication sont déclenchées par les premiers appareils de télécommunication (MT, DIPS, RPP, IWU2, INC2, TE) en cas de liaisons de télécommunication perturbées entre les premiers appareils de télécommunication (MT, DIPS, RPP, IWU2, INC2, TE) et les seconds appareils de télécommunication (BS, DIPS, RFP, IWU1, INC1).

12. Procédé selon l'une quelconque des revendications 1 à 11, **caractérisé en ce que**
les établissements de liaison de télécommunication sont déclenchés par les premiers appareils de télécommunication (MT, DIPS, RPP, IWU2, INC2, TE) en cas de liaisons de télécommunication perturbées entre les premiers appareils de télécommunication (MT, DIPS, RPP, IWU2, INC2, TE) et les seconds appareils de télécommunication (BS, DIPS, RFP, IWU1, INC1).

13. Procédé selon la revendication 8, **caractérisé en ce que**
les liaisons de télécommunication sont interrompues resp. coupées impérativement selon le protocole radio DECT par le fait que les parties mobiles DECT (MT, DIPS, RPP, IWU2) ou les ensembles de terminaison de réseau DECT (DIPS, RPP, IWU2) transmettent avec les terminaux TE attribués, reliés par fils et présentant des interfaces utilisateur, déclenchés par les secondes procédures de commande, des premiers messages NWK "CC-RELEASE" et des seconds messages "CC-RELEASE-COMplete" aux stations de base DECT (BS, DIPS, RFP, IWU1, INC1).

14. Procédé selon la revendication 8, 11 ou 13, **caractérisé en ce que**
les coupures de liaison de télécommunication sont déclenchées par les premiers messages NWK "CC-RELEASE".

15. Procédé selon les revendications 8 et 12, **caractérisé en ce que**
les établissements de liaison de télécommunication sont déclenchés par des troisièmes messages NWK "CC-SETUP".
